# EUROPEAN PATENT SPECIFICATION

(11) **EP 2 335 960 B1**
(45) Date of publication and mention of the grant of the patent: **31.12.2014**
(21) Application number: 09812635.2
(22) Date of filing: 24.08.2009
(51) Int. Cl.: B60J 11/06, B60R 1/06

(54) **REAR-VIEW MIRROR PROTECTING COVER**
SCHUTZABDECKUNG FÜR RÜCKSPIEGEL
HOUSSE DE PROTECTION DE RÉTROVISEUR

(30) Priority: 12.09.2008 CN 200810149599
(43) Date of publication of application: 22.06.2011
(73) Proprietor: Xu, Hong, Shenzhen, Guangdong 518000 (CN); Wan, Jimmy, Shenzhen, Guangdong 518000 (CN)
(72) Inventor: Xu, Hong, Shenzhen, Guangdong 518000 (CN); Wan, Jimmy, Shenzhen, Guangdong 518000 (CN)
(74) Representative: Huang, Chongguang
(86) International application number: PCT/CN2009/073447
(87) International publication number: WO 2010/028569

(56) References cited:
- WO-A1-98/46452
- CN-Y- 2 481 570
- CN-Y- 2 772 897
- CN-Y- 201 049 609
- DE-U1- 20 219 490
- US-A- 4 834 157
- US-B1- 6 325 121

## Description

### FIELD OF THE INVENTION

The invention relates to an external rear view mirror protective cover.

### BACKGROUND OF THE INVENTION

The current design of rear view mirrors of various types equipped on vehicles all extends out of the bodies of vehicles, as such the external rear view mirrors are easily scraped. To avoid this problem, a protective cover is mounted on the external rear view mirror, so as to prevent it from being scraped.

Current protective covers are mainly formed in three forms: 1) hard shell housing having a fixed shape, 2) sticking film and 3) fabric cover. Each of them has disadvantages. For the hard shell housing having a fixed shape, since the different types of vehicles have different external rear view mirrors, it is necessary to have a custom designed mold for each type of external rear view mirror, resulting in a high cost and a difficulty in mounting and removing, and lacking the universality. For the sticking film, since the surface of the external rear view mirror housing is generally of an arc shape, the sticking film may be poorly attached to the mirror surface with a feeling of roughness, and stains which are difficultly removed may be left on the mirror housing surface after the sticking film is tore down. For the fabric cover, it is necessary to design a special paper pattern and make a special cut for each type of external rear view mirror. Due to the lack of the universality, one protective cover cannot match with external rear view mirrors having various sizes, and it may even cover a portion of a mirror surface, resulting in a potential safety problem.

In sum, the above three solutions of a protective cover all have the disadvantage of lacking the universality.

### SUMMARY OF THE INVENTION

In view of this, the present invention provide a side-view mirror protective cover which can solve the problem of lacking the universality.

In order to solve the above problems, the present invention provides an external rear view mirror protective cover, which includes a main body 11 made of elastic material. A first trimmed edge 12 folded towards the inside of the protective cover is provided at one end of the main body 11. The other end of the main body 11 opposite to the trimmed edge 12 is of an arc shape. The main body 11 has a mirror surface opening 13 for the external rear view mirror, and the mirror surface opening 13 is provided with a second trimmed edge 14. Securing bands 15 are arranged on the second trimmed edge 14 and are configured to allow an excessive portion of the protective cover which may otherwise cover a mirror surface to be drawn inside a gap between the mirror surface and a mirror housing.
Document US 4 834 157 A which could be considered as the starting point of the present invention does not show the following features of claim 1 of the present invention: the first trim edge can be folded towards the inside of the protective cover, and the securing bands on the second trim edge corresponding to a circumferential edge of opening are configured to allow an excessive portion of the protective cover, which may otherwise cover a mirror surface, to be drawn inside a gap between the mirror surface and a mirror housing.

Preferably, the elastic material is nylon, lycra or latex.

Preferably, the shape of the mirror surface opening is rectangle or ellipse.

Preferably, the first and the second trimmed edges are formed by 3 to 5 needles overlocked stitches using an elastic thread.

The protective cover according to the present invention may be applied to external rear view mirrors of various types of vehicles due to its use of elastic material. The trimmed edge at the mirror opening of the protective cover may effectively prevent the protective cover from sliding off the external rear view mirror housing. The protective cover may effectively avoid the external rear view mirror from being damaged by the external scraping, collision and various accidents.

### BRIEF DESCRIPTION OF THE DRAWINGS

Fig. 1 is a front view of an embodiment; and
Fig.2 is a rear view of the embodiment.

### DETAILED DESCRIPTION

Hereinafter, embodiments of the present invention will be described in details in conjunction with the drawings.

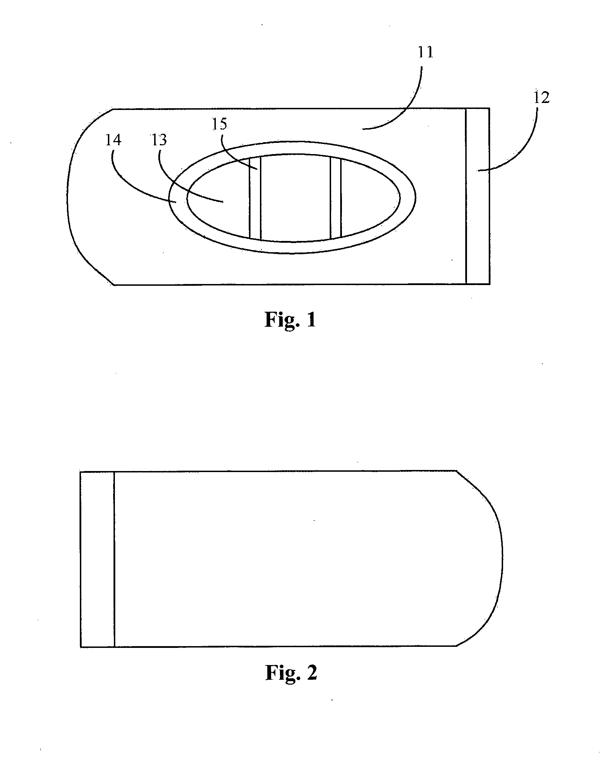

Referring to Fig.1, Fig1 is a front view of an embodiment, viewing from the front of a protective cover. A main body 11 of the protective cover has an opening at one end thereof, and a trimmed edge 12 is provided at the opening. The trimmed edge 12 is formed by folding towards the inside of the protective cover. The other end of the main body 11 of the protective cover is of an arc shape so as to match with the contour of the mirror housing. A mirror surface opening 13 having the shape of ellipse is provided on the main body 11, and a trimmed edge 14 is provided at the mirror opening 13. The mirror opening 13 may also be of a rectangular shape so as to match with the shape of the mirror surface of the external rear view mirror of a vehicle. The trimmed edges 12 and 14 are formed in a special manner, that is, the trimmed edges are made by 3 to 5 needles overlocked stitches using an elastic thread.

Fig.2 is a rear view of the embodiment, viewing from the rear of a protective cover. The front and rear parts of the main body 11 may be of an integral structure. Alternatively, the main body 11 may be composed of two separate front and rear parts that are seamed together.

The material of the protective cover may be a variety of elastic material, such as nylon, lycra, latex and the like.

Securing bands 15 are provided on the trimmed edge 14. The number of the securing bands 15 may be two or more. Due to the elastic material of the protective cover, when the protective cover is mounted on the external rear view mirror, the trimmed edge 14 can be easily pulled inside the gap between the mirror surface and the mirror housing under the guiding of the securing bands 15, so as to make the main body 11 of the protective cover abut against the housing of the external rear view mirror closely. The two securing bands 15 on the trimmed edge 14 allow the excessive portion of the protective cover which may otherwise cover the mirror surface to be drawn inside the gap between the mirror surface and the mirror housing, which can solve the problem that the mirror surface is covered.

The protective cover according to the present invention may be applied to external rear view mirrors of various types of vehicles due to elastic material. The trimmed edge 12 at the mirror opening of the protective cover may effectively prevent the protective cover from sliding off the external rear view mirror. The protective cover may effectively avoid the external rear view mirror from being damaged by the external scraping, collision and various accidents. A propagandistic design may also be printed on the protective cover, so that the external rear view mirror of vehicle may become a platform for displaying messages and graphics.

## Claims

1. An external rear view mirror protective cover,
comprising a main body (11) made of elastic material, wherein a first end of the main body (11) comprises a first trimmed edge (12) configured to be folded towards the inside of the protective cover, a second end of the main body (11) opposite to the first trimmed edge (12) is of an arc shape; the main body (11) comprises a mirror surface opening (13) for the external rear view mirror, and the mirror surface opening (13) comprises a second trimmed edge (14),
wherein securing bands (15) are provided on the second trimmed edge (14) and are configured to allow an excessive portion of the protective cover, which may otherwise cover a mirror surface, to be drawn inside a gap between the mirror surface and a mirror housing.

2. The external rear view mirror protective cover according to claim 1, wherein the elastic material is nylon, lycra or latex.

3. The external rear view mirror protective cover according to claim 1, wherein the shape of the mirror surface opening (13) is rectangle or ellipse.

4. The external rear view mirror protective cover according to claim 1, wherein the first and the second trimmed edges (12, 14) are formed by 3 to 5 needles overlocked stitches using an elastic thread.

## Patentansprüche

1. Schutzabdeckung für einen Außenrückspiegel,
die einen Hauptkorpus (11) umfasst, der aus einem elastischen Material besteht, wobei ein erstes Ende des Hauptkorpus (11) einen ersten zugerichteten Rand (12) umfasst, der dafür konfiguriert ist, in Richtung der Innenseite der Schutzabdeckung gefalzt zu werden, ein zweites Ende des Hauptkorpus (11) gegenüber dem ersten zugerichteten Rand (12) eine Bogenform hat, der Hauptkorpus (11) eine Spiegelflächenöffnung (13) für den Außenrückspiegel umfasst, und die Spiegelflächenöffnung (13) einen zweiten zugerichteten Rand (14) umfasst,
wobei Sicherungsbänder (15) an dem zweiten zugerichteten Rand (14) vorhanden sind und dafür konfiguriert sind, es zu ermöglichen, dass ein überstehender Abschnitt der Schutzabdeckung, der sonst eine Spiegelfläche verdecken könnte, in einen Spalt zwischen der Spiegelfläche und einem Spiegelgehäuse hineingezogen wird.

2. Schutzabdeckung für einen Außenrückspiegel nach Anspruch 1, wobei das elastische Material Nylon, Lycra oder Latex ist.

3. Schutzabdeckung für einen Außenrückspiegel nach Anspruch 1, wobei die Form der Spiegelflächenöffnung (13) rechteckig oder elliptisch ist.

4. Schutzabdeckung für einen Außenrückspiegel nach Anspruch 1, wobei der erste und der zweite zugerichtete Rand (12, 14) durch 3 bis 5 Nadel-Überwendlichstiche unter Verwendung eines elastischen Fadens gebildet werden.

## Revendications

1. Housse de protection pour rétroviseur externe, comprenant un corps principal (11) constitué d'un
matériau élastique, dans laquelle une première extrémité du corps principal (11) comprend un premier bord fini (12) configuré pour être replié vers l'intérieur de la housse de protection, une seconde extrémité du corps principal (11) opposée à la première extrémité finie (12) est en forme d'arc ; le corps principal (11) comprend une ouverture de surface spéculaire (13) pour le rétroviseur externe et l'ouverture de surface spéculaire (13) comprend un second bord fini (14), dans laquelle des bandes de retenue (15) sont prévues
sur le second bord fini (14) et sont configurées pour pouvoir tirer une portion en excès de la housse de protection, qui peut autrement couvrir une surface spéculaire, à l'intérieur d'un intervalle entre la surface spéculaire et un logement de miroir.

2. Housse de protection pour rétroviseur externe selon la revendication 1, dans laquelle le matériau élastique est le Nylon, le Lycra ou un latex.

3. Housse de protection pour rétroviseur externe selon la revendication 1, dans laquelle la forme de l'ouverture de surface spéculaire (13) est rectangulaire ou elliptique.

4. Housse de protection pour rétroviseur externe selon la revendication 1, dans laquelle le premier et le second bord fini (12, 14) sont formés par des piqûres de surjet à 3 à 5 aiguilles en utilisant un fil élastique.
